(19) Europäisches Patentamt
European Patent Office
Office européen des brevets

(11) Numéro de publication: **0 368 688 A1**

(12) # DEMANDE DE BREVET EUROPEEN

(21) Numéro de dépôt: **89402678.0**

(51) Int. Cl.5: **C08G 79/08, D01F 9/08**

(22) Date de dépôt: **29.09.89**

(30) Priorité: **06.10.88 FR 8813112**

(43) Date de publication de la demande: **16.05.90 Bulletin 90/20**

(84) Etats contractants désignés: **AT BE CH DE ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Ardaud, Pierre**
**133, rue Clémenceau**
**F-69110 Sainte Foy/Les/Lyon(FR)**
Inventeur: **Mignani, Gérard**
**2, avenue des Frères Lumière**
**F-69008 Lyon(FR)**

(74) Mandataire: **Esson, Jean-Pierre et al**
**RHONE-POULENC CHIMIE Service Brevets**
**Chimie 25, quai Paul Doumer**
**F-92408 Courbevoie Cedex(FR)**

(54) **Polymères à base de bore et d'azote, leur procédé de préparation et leur utilisation comme précurseurs de nitrure de bore.**

(57) L'invention a trait à de nouveaux polymères à base de bore et d'azote susceptibles d'être utilisés à la préparation de matériaux céramiques en nitrure de bore. Ils sont obtenus en faisant réagir (a) au moins un composé cyclique (composé A) constitué d'unités répétées de formule

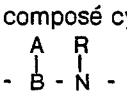

dans laquelle A représente un halogène et R un radical choisi notamment parmi l'hydrogène et les radicaux hydrocarbonés, (b) au moins un composé présentant au moins un atome de bore sur lequel sont directement liés deux atomes d'halogène (composé B), et (C) au moins un composé présentant au moins un groupement $NH_2$ (composé C).

EP 0 368 688 A1

# POLYMERES A BASE DE BORE ET D'AZOTE, LEUR PROCEDE DE PREPARATION ET LEUR UTILISATION COMME PRECURSEURS DE NITRURE DE BORE

La présente invention a trait à de nouveaux polymères à base de bore et d'azote.

Elle concerne également un procédé de préparation de tels polymères à base de bore et d'azote.

Elle concerne également, à titre d'application, l'utilisation de ces polymères dans la fabrication de produits et articles céramiques à base de nitrure de bore, notamment sous forme de fibres.

Elle concerne enfin, à titre de produit intermédiaire nouveau et utile, une composition de matière utilisable pour la synthèse desdits polymères selon un procédé conforme à l'invention.

On sait que le nitrure de bore est un matériau de plus en plus recherché, en raison notamment de sa stabilité aux hautes températures, de sa résistance aux chocs thermiques, de sa grande inertie chimique et de sa très bonne conductivité thermique. D'autre part, sa faible conductivité électrique en fait un isolant de choix.

On connait à l'heure actuelle divers procédés pour préparer du nitrure de bore.

L'un d'entre eux consiste à faire réagir en phase gazeuse du trichlorure de bore avec de l'ammoniac. On obtient ainsi une poudre fine de nitrure de bore, qu'il est possible de fritter pour obtenir des pièces massives. Toutefois, les pièces obtenues présentent une microporosité qui peut être très génante pour certaines applications.

Plus récemment, on a découvert qu'il était possible de préparer du nitrure de bore par pyrolyse de polymères précurseurs.

L'intérêt de la voie polymère réside surtout dans les possibilités de mise en forme de ce type de produit, et plus particulièrement pour l'obtention, après pyrolyse, de fibres en nitrure de bore.

On a ainsi décrit dans le brevet US 4.581.468 un polymère organoborique qui est obtenu par action de l'ammoniac (ammonolyse) sur un trichloro-trialkylsilyl-borazole (composé cyclique), et qui, indique-t-on, permet d'aboutir, après filage puis pyrolyse à 970° C, à des fibres de nitrure de bore.

Toutefois, le composé cyclique de départ décrit dans ce document est très difficile à préparer, donc coûteux, et, par ailleurs, le rendement pondéral maximal en nitrure de bore susceptible d'être obtenu avec ce type de produit ne dépasse pas 22 %, ce qui signifie, a priori, des rendements réels bien inférieurs à cette valeur.

La présente invention a donc pour but de résoudre les problèmes ci-dessus et de proposer des moyens simples, efficaces, économiques et de mise en oeuvre aisée, pour obtenir sous des formes les plus diverses (fils, fibres, articles moulés, revêtements, pellicules, films, etc...) de nouveaux polymères organométalliques à base de bore et d'azote qui, lors de leur pyrolyse, donnent des produits à base de nitrure de bore avec un rendement pondéral élevé.

On a maintenant trouvé, et il s'agit là d'un des premiers objets de la présente invention, que l'on peut obtenir, avec des rendements pondéraux élevés, du nitrure de bore à partir de polymères précurseurs à base de bore et d'azote lorsque ces polymères ont été préparés au moyen du nouveau procédé selon l'invention, ledit nouveau procédé de préparation étant caractérisé par le fait que l'on fait réagir :

(a) au moins un composé cyclique (composé A) constitué d'unités répétées de formule (1) :

$$-\overset{\overset{A}{|}}{B}-\overset{\overset{R}{|}}{N}- \qquad (1)$$

dans laquelle A représente un atome d'halogène et R un radical choisi parmi l'atome d'hydrogène, les radicaux hydrocarbonés, éventuellement substitués, les radicaus organosilylés et hydrogénoorganosilylés,

(b) au moins un composé présentant au moins un atome de bore sur lequel sont directement liés deux atomes d'halogène (composé B),

(c) au moins un composé comprenant au moins un groupement $NH_2$ (composé C).

Pour la suite de l'exposé, les composés C seront appelés agents d'aminolyse dans le cas le plus général (composé aminé présentant au moins un groupement $NH_2$), et agent d'ammonolyse dans le cas plus particulier où il s'agit de l'ammoniac.

D'autre part, et en conséquence de ce qui précède, les produits de réaction obtenus à partir des composés A, B et C seront alors appelés, selon le cas, aminolysats ou ammonolysats, ces derniers étant donc inclus dans la famille des aminolysats.

Ces aminolysats, comme il sera expliqué plus en détails par la suite, rentrent dans le cadre des nouveaux polymères à base de bore et d'azote constitutifs d'un second object de la présente invention.

Le procédé de préparation selon l'invention repose donc essentiellement sur une co-aminolyse d'un mélange comprenant au moins un composé cyclique A et au moins un composé B tels que définis précédemment.

Ce mélange, destiné à être aminolysé, est constitutif, au titre de produit intermédiaire nouveau et utile, d'un troisième objet de la présente invention.

La Demanderesse a en effet découvert que, de façon totalement inattendue et surprenante, la co-aminolyse d'un tel mélange permet d'aboutir à des polymères auxquels une structure à réseau particulièrement réticulé confère une stabilité thermique accrue lors de la pyrolyse, et de ce fait augmente les rendements en nitrure de bore.

D'autre part, et il s'agit là d'un avantage supplémentaire du procédé selon l'invention sur les procédés de l'art antérieur (brevet US 4 581 468), le fait d'opérer avec des mélanges à base de composés B tels que définis ci-avant, qui sont des composés faciles à préparer industriellement et donc peu coûteux, permet de diminuer substantiellement la quantité de composés cycliques à utiliser, ce qui rend le procédé selon l'invention particulièrement économique.

Pour des raisons de clarté, l'exposé de l'invention qui suit débutera par le procédé de synthèse des polymères précurseurs.

Le composé cyclique A de départ généralement utilisé est un composé chloré, bien qu'un composé fluoré, bromé ou iodé puisse également convenir.

Ce composé répond de préférence à la formule (1′) suivante :

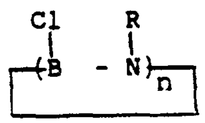

(1′)

dans laquelle le radical R, comme déjà indiqué, représente l'atome d'hydrogène, un radical hydrocarboné, éventuellement substitué, ou un radical organosilylé ou hydrogénoorganosilylé, et l'indice n représente un entier compris entre 2 et 20, et de préférence égal à 3 ou 4, et encore plus préférentiellement égal à 3.

Les radicaux hydrocarbonés les plus usités sont les radicaux alkyles, cycloalkyles, aryles, alkylaryles et arylalkyles, ainsi que les radicaux alcenyles et alcynyles.

Parmi les radicaux alkyles convenant pour la présente invention, on peut citer à titre d'exemples les radicaux méthyle, éthyle, propyle, butyle, pentyle, hexyle, heptyle et octyle. Parmi les radicaux cycloalkyles, on peut citer les radicaux cyclopentyle, cyclohexyle et cycloheptyle. A titre de radicaux aryles : les radicaux phényle et naphtyle ; de radicaux alkylaryles : les radicaux tolyle et xylyle ; et enfin de radicaux arylalkyles : les radicaux benzyle et phényléthyle.

A titre de radicaux alcenyles, on peut citer plus particulièrement les radicaux vinyle, allyle, butenyle et pentenyle.

On peut citer comme radicaux alcynyles, les radicaux éthynyle, propynyle et butynyle.

Enfin, à titre de radicaux silylés, on peut citer plus particulièrement les radicaux (trialkyl)silylés, tels que notamment les radicaux triméthyl, triéthyl, tripropyl, tributyl, tripentyl, trihexyl, triheptyl et trioctyl-silylés.

Selon un mode préférentiel de réalisation de l'invention, on opère avec des composés cycliques A pour lesquels le radical R est choisi parmi l'atome d'hydrogène ou des radicaux hydrocarbonés tels que définis précédement, et plus particulièrement des radicaux alkyles.

Selon un mode encore plus préférentiel de réalisation de l'invention, le radical R représente l'atome d'hydrogène.

Les composés cycliques A ci-dessus définis sont bien connus de l'état de la technique, et peuvent être préparés par tout moyen connu en soi. Ils peuvents être notamment préparés par thermolyse, dans du xylène à reflux ou en phase vapeur, des composés correspondants du type

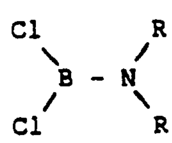

(R ayant la signification donnée ci-dessus) et selon des modalités telles que déjà décrites dans la littérature (cf par exemple R.L. WELLS dans Inorg. Chemistry, 2, (1963), 29, ainsi que P. GEYMAYER dans Monatsh, 97, (1966), 429). Ils peuvent également être préparés par action de $BCl_3$ sur $NH_4Cl$ (cf Inorganic Synthesis 10, p. 139-41).

Le composé B de départ est également un composé généralement chloré.

Ce composé répond de préférence à la formule (2) suivante :

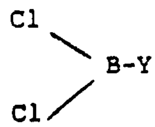 (2)

dans laquelle Y représente

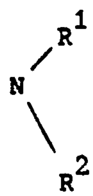 ,

les radicaux $R^1$ et $R^2$, identiques ou différents, étant choisis parmi l'atome d'hydrogène, les radicaux hydrocarbonés, éventuellement substitués, et les radicaux organosilylés et hydrogénoorganosilylés.

Les radicaux hydrocarbonés les plus usités sont les radicaux alkyles, cycloalkyles, aryles, alkylaryles et arylalkyles, ainsi que les radicaux alcenyles et alcynyles.

Parmi les radicaux alkyles convenant pour la présente invention, on peut citer à titre d'exemples les radicaux méthyle, éthyle, propyle, butyle, pentyle, hexyle, heptyle et octyle. Parmi les radicaux cycloalkyles, on peut citer les radicaux cyclopentyle, cyclohexyle et cycloheptyle. A titre de radicaux aryles : les radicaux phényle et naphtyle ; de radicaux alkylaryles : les radicaux tolyle et xylyle ; et enfin de radicaux arylalkyles : les radicaux benzyle et phénylethyle.

A titre de radicaux alcenyles, on peut citer plus particulièrement les radicaux vinyle, allyle, butenyle et pentenyle.

Enfin, on peut citer comme radicaux alcynyles, les radicaux éthynyle, propynyle et butynyle.

Selon un mode préférentiel de réalisation de l'invention, les radicaux $R^1$ et $R^2$ sont des radicaux organosilylés ou hydrogénoorganosilylés, et plus particulièrement des radicaux (triorgano)silylés oú (hydrogénodiorgano)silylés. Encore plus préférentiellement, on utilise des radicaux (trialkyl)silylés, tels que notamment les radicaux triméthyl, triéthyl, tripropyl, tributyl, tripentyl, trihexyl, triheptyl et trioctyl-silylés. Les radicaux (triméthyl)silylés conviennent particulièrement bien.

Les composés de formule (2) ci-dessus sont bien connus de l'état de la technique, et peuvent être préparés par tout moyen connu en soi.

Par exemple, dans le cas de radicaux $R^1$ et $R^2$ de type alkyle, on pourra se référer notamment aux travaux de WILBERG et SCHUSTER (Zeitschrist für Anorganische Chemie, 1933, 213, page 77), de BROWN (Journal of American Chemical Society, 1952, 74, page 1219), ou bien encore de BURG et BANUS (Journal of American Chemical Society, 1954, 76, page 3903).

En ce qui concerne des radicaux $R^1$ et $R^2$ du type triorganosilylé, on pourra se reporter aux travaux de JENNE et NIEDENZU (Inorganic Chemistry, 1964, 3, 68), de SUJISHII et WITZ (Journal of American Ceramic Society, 1957, 79, page 2447), ou bien encore de WANNAGAT (Angew Chemie International Edition, 3, 1964, page 633).

D'une manière générale, le composé B désiré peut être obtenu par action de $BCl_3$ sur

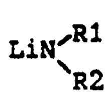 ,

avec des conditions de températures et de rapports molaires convenables.

Concernant enfin les agents d'aminolyse (composé C) rentrant dans le cadre du procédé selon l'invention, on peut citer l'ammoniac, les amines primaires, les diamines (hydrazine, alkylhydrazine, hydrazide, alkylenediamine ..), les amides, les silylamines, etc...

On utilise toutefois de préférence des composés qui répondent à la formule (3) suivante :

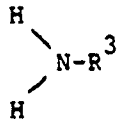

(3)

dans laquelle le radical $R^3$ est choisi parmi l'atome d'hydrogène, les radicaux hydrocarbonés éventuellement substitués, et les radicaux organosilylés et hydrogénoorganosilylés. Conviennent ainsi plus particulièrement :

- l'ammoniac ($R^3$ = atome d'hydrogène)
- les organoamines primaires ($R^3$ = radical alkyle, cycloalkyle, aryle, alkylaryle ou arylalkyle), telles que par exemple la méthylamine, l'éthylamine, la propylamine, la butylamine, la pentylamine, l'hexylamine, l'heptylamine et l'octylamine, la cyclopropylamine, la phénylamine...
- les silylamines, et plus particulièrement les triorganosilylamines comme la (triméthylsilyl)amine et la (triéthylsilyl)amine, ou bien encore les hydrogénoorganosilylamines comme l'(hydrogénodiméthylsilyl)amine.

Les agents d'aminolyse préférés sont les alkylamines primaires et l'ammoniac.

Selon un mode de mise en oeuvre encore plus préféré, on opère avec l'ammoniac.

Le schéma général des réactions d'aminolyse au sein du milieu réactionnel est le suivant :

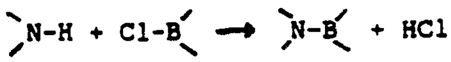

La réaction d'aminolyse peut être opérée en masse, ou, de préférence, en milieu solvant organique (hexane, pentane, toluène ...) et sous conditions anhydres.

On travaille généralement à la pression atmosphérique, bien que des pressions inférieures ou supérieures ne soient bien évidement pas exclues.

D'autre part, les réactions d'aminolyse étant généralement assez exothermiques, on préfére opérer à basse température.

La durée de la réaction, suivant les quantités de réactifs introduites, peut varier de quelques minutes à plusieurs heures.

Le rapport molaire dans le mélange de départ entre le composé cyclique A et le composé B peut varier dans une très large mesure, ce qui ajoute à la souplesse et au champ d'application du procédé selon l'invention. D'une manière générale, on observe que plus de pourcentage de composé A augmente dans ce mélange, et plus le rendement pyrolytique en nitrure de bore du polymère obtenu en fin de réaction s'élève. Selon un mode préféré de réalisation de l'invention, le rapport molaire [composé A]/[Composé B] dans le mélange de départ est au moins de 1/10.

A l'issue de cette étape de réaction, on sépare le polymère du milieu de réaction, notamment du chlorydrate d'ammonium formé, et ceci par tout moyen connu en soi, par exemple par filtration, ou bien encore par extraction et décantation au moyen notamment d'ammoniac liquide.

Le polymère ainsi récupéré, après éventuellement élimination du solvant puis séchage, constitue alors la production.

Si nécessaire, on peut, dans une étape ultérieure, traiter thermiquement le polymère obtenu (thermolyse) dans le but d'améliorer encore sa tenue à la pyrolyse, et donc son rendement pondéral en nitrure de bore. Cette thermolyse, généralement opérée en masse et à une température comprise entre 100 °C et 200 °C, et de préférence sous ammoniac, a pour effet de modifier la structure interne du polymère, probablement en augmentant son caractère réticulé, ce qui peut expliquer sa tenue thermique améliorée.

Outre le procédé général de préparation précédemment décrit, l'invention concerne également, à titre de produits nouveaux, des polymères à base de bore et d'azote, susceptibles d'être obtenus notamment par ledit procédé, et qui présentent, lors de leur pyrolyse, des rendements pondéraux en nitrure de bore particulièrement améliorés.

On a maintenant trouvé que l'on peut obtenir, avec des rendements pondéraux élevés, du nitrure de bore à partir d'un polymère précurseur à base de bore et d'azote, ledit polymère étant caractérisé en ce qu'il présente, par molécule, une répétition :

(a) de motifs de formule (I) :

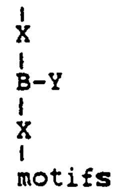

(I)

et (b) de motifs de formule (II) :

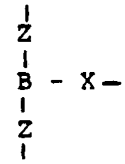

(II)

formules dans lesquelles X représente N-$R^3$, Y représente

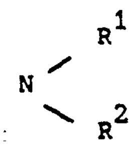

et Z représente N-R, les radicaux R, $R^1$, $R^2$ et $R^3$ étant choisis, identiques ou différents, parmi l'atome d'hydrogène, les radicaux hydrocarbonés, éventuellement substitués, et les radicaux organosilylés et hydrogénoorganosilylés.

La Demanderesse a en effet découvert que de tels polymères à base de bore et d'azote, qui possèdent une structure en réseau essentiellement formée d'une combinaison de motifs de formule (I) et de motifs de formule (II) tels que définis ci-dessus, présentent une tenue à la pyrolyse nettement améliorée par rapport aux précurseurs connus jusqu'alors, et par là même permettent d'obtenir, avec de bons rendements pondéraux en céramique, des matériaux à base de nitrure de bore.

On aura d'ores et déjà compris qu'il est possible d'obtenir des polymères présentant tous les motifs (I) et (II) désirés, c'est-à-dire tous les radicaux R, $R^1$, $R^2$ et $R^3$ désirés, simplement en faisant réagir des composés A, B et C tels que définis plus haut qui possèdent les mêmes radicaux R, $R^1$, $R^2$ et $R^3$.

Plus spécifiquement, et sans vouloir limiter la présente invention à la théorie, si le mélange de départ comprend

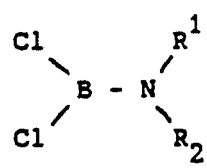

(composé B) et un composé cyclique du type

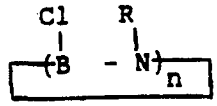

(composé A), la co-aminolyse de ce mélange par un composé du type

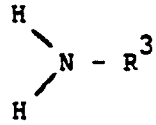

(composé C)

conduira, selon des mécanismes classiques, à un polymère essentiellement formé d'une combinaison, de

type aléatoire, entre des motifs de formule (I) :

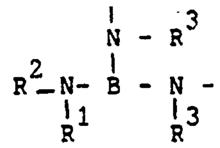 (I)

et des motifs de formules (III) :

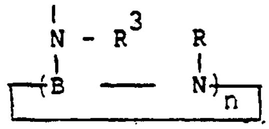 (III)

ces derniers n'étant eux-mêmes bien entendu qu'une répétition formelle de n motifs de formule (II) telle que précédemment définie.

De même, le rapport entre les motifs de formule (I) et ceux de formule (II) dans le polymère final peut être ajusté simplement au moyen du rapport approprié entre les composés A et les composés B présents initialement dans le milieu réactionnel.

Selon un mode préféré de réalisation de l'invention, le polymère comporte au moins 10 % en moles de motifs de formule (II).

D'une manière générale, on observe que plus le pourcentage de motifs (II) s'élève, et plus le rendement en nitrure de bore après pyrolyse augmente.

A titre de radicaux hydrocarbonés et silylés convenant pour les polymères selon l'invention, on pourra se référer aux divers exemples déjà donnés pour les radicaux R, $R^1$, $R^2$ et $R^3$ des composés A, B et C.

En conséquence, les radicaux R, $R^1$, $R^2$ et $R^3$ constituant les polymères préférés selon l'invention sont les suivants :

- R est choisi parmi l'atome d'hydrogène et les radicaux alkyles ; il représente encore plus préférentiellement l'hydrogène
- $R^1$ et $R^2$ représentent des radicaux organosilylés, de préférence (triorgano)silylés, et plus particulièrement des radicaux (trialkyl)silylés
- $R^3$ est choisi parmi l'atome d'hydrogène et les radicaux alkyles; encore plus préférentiellement $R^3$ représente l'atome d'hydrogène.

Dans un exemple particulièrement préféré de polymère selon l'inven tion, les motifs (I) et (III) définis ci-avant sont du type suivants (Me = $CH_3$) :

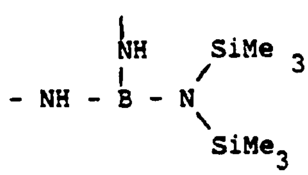 (I)

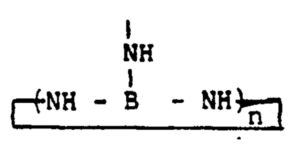 (III)

Les polymères selon l'invention présentent une masse molaire moyenne en nombre qui peut être comprise entre 500 et 10000, de préférence comprise entre 500 et 5000.

Ils présentent d'autre part une masse molaire moyenne en poids pouvant s'étaler entre 600 et 100 000, de préférence entre 1 000 et 10 000.

Suivant le rapport molaire existant entre les motifs de formule (I) et ceux de formule (II), les polymères selon l'invention peuvent se présenter, à température ambiante, sous une forme allant d'une huile peu visqueuse ou très visqueuse jusqu'à l'état solide. D'une manière générale, à un taux élevé de motifs de formule (II) correspond un polymère de poids molaire élevé, donc de viscosité élevée.

Les polymères selon l'invention sont d'autre part solubles dans la plupart des solvants organiques usuels (hexane, toluène ...), ce qui peut être très avantageux au niveau de leur possibilité de mise en forme.

Les polymères à base de bore de d'azote selon l'invention trouvent une application toute particulière

dans la fabrication de produits et articles céramiques contenant, au moins en partie, du nitrure de bore.

Dans le cas le plus général (obtention de poudres), on pyrolyse alors le polymère dans une atmosphère inerte, sous vide, ou de préférence, sous ammoniac, à une température allant de 100 à 2 000 ° C jusqu'à ce que le polymère soit converti entièrement en nitrure de bore.

Le polymère, avant pyrolyse, peut également être mis en forme, par moulage ou par filage par exemple. Dans le cas où l'on désire obtenir des fibres, le polymère est filé au moyen d'une filière classique (après fusion éventuelle si le polymère est initialement à l'état solide), puis est traité thermiquement à une température allant de 100 à 2 000 ° C et de préférence sous atmosphère d'ammoniac, pour donner une fibre en nitrure de bore.

Les fibres obtenues peuvent alors servir de structure de renforcement pour des matériaux composites du type céramique/céramique, céramique/métal, ou céramique/plastique.

Des exemples illustrants l'invention vont maintenant être donnés.

Exemple 1

Dans un réacteur double enveloppe de 2 litres, séché sous azote, on charge 37,2 g (0,202 mole) du composé cyclique

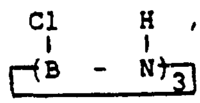
,

230 g (0,95 mole) de $Cl_2B$ - N $(SiMe_3)_2$ (Me = $CH_3$), et 1070 g de toluène (solvant).

Le mélange est alors refroidi à -40 ° C. Puis on introduit dans ce mélange de l'ammoniac durant 5 heures sous un débit de 25 litres/heure.

La réaction est exothermique.

En fin d'addition, le mélange est laissé sous agitation une nuit en laissant remonter la température jusqu'à l'ambiante, puis filtré sous pression d'azcte.

Le filtrat ainsi obtenu est évaporé (élimination du solvant), et l'on récupère 111 g d'un solide blanc, constituant le polymère précurseur selon l'invention.

Le rendement isolé de la réaction de co-ammonolyse est de 56,4 %.

Les caractéristiques du polymère obtenu sont les suivantes :

$\overline{M}n$ > 1000 (masse molaire moyenne en nombre)

$\overline{M}w$ > 2000 (masse molaire moyenne en poids)

teneur résiduelle en Cl : 0,73 % en poids

TGA (sous hélium à 850 ° C) : 34,3 %

Exemple 2

Dans un réacteur double enveloppe de 0,5 litre, séché sous azote, on charge 4 g (0,022 mole) du composé cyclique

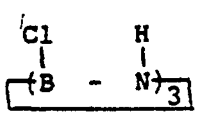

51,4 g (0,213 mole) de $Cl_2B$ - N $(SiMe_3)_2$ (Me = $CH_3$), et 420 ml de toluène (solvant).

Le mélange est alors refroidi à -20 ° C. Puis on introduit dans ce mélange de l'ammoniac durant 1 heure 30 sous un débit de 30 litres/heure.

La réaction est exothermique.

En fin d'addition, le mélange est laissé sous agitation une nuit en laissant remonter la température jusqu'à l'ambiante, puis filtré sous pression d'azote.

Le filtrat ainsi obtenu est évaporé (élimination du solvant), et l'on récupère 29,3 g d'une huile liquide visqueuse, constituant le polymère précurseur selon l'invention.

Le rendement isolé de la réaction de co-ammonolyse est de 69,3 %.

Les caractéristiques du polymère obtenu sont les suivantes :
$\overline{M}n$ = 700
$\overline{M}w$ = 1210
IP = 1,72 (indice de polydispersité)
teneur résiduelle en Cl : < 0,5 % en poids
TGA (sous hélium à 850° C) : 24,6 %

Exemple 3

Dans un réacteur double enveloppe de 0,5 litre séché sous $N_2$, on charge 10,6 g de $(B(Cl)-N(Me))_3$ soit 0,047 mol, 115,3 g de $Cl_2B-N(SiMe_3)_2$ soit 0,476 mol et 350 ml de toluène (solvant).

Le mélange est refroidi à -10° C puis on introduit dans ce mélange de l'ammoniac durant 5 heures sous un débit de 10 litres/heure.

La réaction est exothermique.

En fin d'addition le mélange est laissé sous agitation une nuit tout en laissant remonter lentement la température jusqu'à l'ambiante puis est filtré sous pression d'azote.

Le filtrat ainsi obtenu est évaporé pour conduire à 71,4 grammes d'huile liquide assez visqueuse constituant le polymère précurseur selon l'invention.

Le rendement isolé de la réaction de co-ammonolyse est de 75,1 %.

Les caractéristiques du polymère obtenu sont les suivantes :
transition vitreuse : - 1° C
température de réticulation : 95° C
$\overline{M}n$ : 690
$\overline{M}w$ = 919
Ip = 1,33
teneur résiduelle en Cl : 0,085 % en poids
TGA (sous hélium à 850° C) = 12,95 %

**Revendications**

1/ Polymère à base de bore et d'azote caractérisé en ce qu'il présente, par molécule, une répétition :

(a) de motifs de formule (I) :

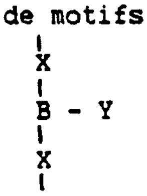
(I)

et (b) de motifs de formule (II) :

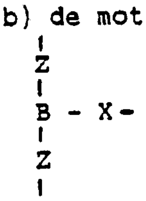
(II)

formules dans lesquelles X représente $N-R^3$, Y représente

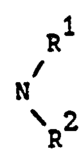

et Z représente N-R, les radicaux R, $R^1$, $R^2$ et $R^3$ étant choisis, identiques ou différents, parmi l'atome d'hydrogène, les radicaux hydrocarbonés, éventuellement substitués, et les radicaux organosilylés et

hydrogénoorganosilylés.

2/ Polymère selon la revendication 1 caractérisé en ce que le rapport molaire entre les motifs de formule (II) et les motifs de formule (I) est au moins de 0,1.

3/ Polymère selon l'une quelconque des revendications 1 et 2 caractérisé en ce que le radical R est un radical hydrocarboné choisi parmi les radicaux alkyles, cycloalkyles, aryles, alkylaryles, arylalkyles, alcényles et alcynyles.

4/ Polymère selon la revendication 3 caractérisé en ce que R est un radical alkyle.

5/ Polymère selon l'une quelconque des revendications 1 à 2 caractérisé en ce que R est l'atome d'hydrogène.

6/ Polymère selon l'une quelconque des revendications précédentes caractérisé en ce que les radicaux $R^1$ et $R^2$ sont choisis parmi les radicaux organosilylés et hydrogénoorganosilylés.

7/ Polymère selon la revendication 6 caractérisé en ce que les radicaux $R^1$ et $R^2$ sont des radicaux (triorgano)silylés.

8/ Polymère selon la revendication 7 caractérisé en ce que les radicaux $R^1$ et $R^2$ sont des radicaux (trialkyl)silylés.

9/ Polymère selon l'une quelconque des revendications précédentes caractérisé en ce que $R^3$ est choisi parmi l'atome d'hydrogène et les radicaus alkyles, cycloalkyles, aryles, alkylaryles et arylalkyles.

10/Polymère selon la revendication 9 caractérisé en ce que $R^3$ représente l'atome d'hydrogène ou un radical alkyle.

11/Polymère selon la revendication 10 caractérisé en ce que $R^3$ est l'atome d'hydrogène.

12/Polymère selon l'une quelconque des revendications précédentes caractérisé en ce que sa masse molaire moyenne en nombre $\overline{M}n$ est comprise entre 500 et 10000, de préférence comprise entre 500 et 5000.

13/Polymère selon l'une quelconque des revendications précédentes caractérisé en ce que sa masse molaire moyenne en poids $\overline{M}w$ est comprise entre 600 et 100 000, de préférence comprise entre 1000 et 10000.

14/Procédé de préparation d'un polymère à base de bore et d'azote tel que notamment défini à l'une quelconque des revendications 1 à 13, caractérisé par le fait que l'on fait réagir :

(a) au moins un composé cyclique (composé A) constitué d'unités répétées de formule (1) :

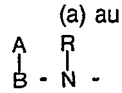 (1)

dans laquelle A représente un atome d'halogène et R un radical choisi parmi l'atome d'hydrogène, les radicaux hydrocarbonés, éventuellement substitués, les radicaux organosilylés et hydrogénoorganosilylés,

(b) au moins un composé présentant au moins un atome de bore sur lequel sont directement liés deux atomes d'halogène (composé B),

(c) au moins un composé comprenant au moins un groupement $NH_2$ (composé C).

15/Procédé selon la revendication 14 caractérisé en ce que la réaction s'effectue en masse.

16/Procédé selon la revendication 14 caractérisé en ce que la réaction s'effectue en solution dans un solvant organique anhydre.

17/Procédé selon l'une quelconque des revendications 14 à 16 caractérisé en ce que le rapport molaire entre le composé A et le composé B est au moins égal à 0,1.

18/Procédé selon l'une quelconque des revendications 14 à 17 caractérisé en ce que A représente l'atome de chlore.

19/Procédé selon l'une quelconque des revendications 14 à 18 caractérisé en ce que le composé A répond à la formule (1') suivante:

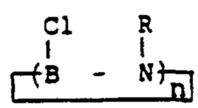 (1')

dans laquelle l'indice n est un entier compris entre 2 et 20.

20/Procédé selon la revendication 19 caractérisé en ce que l'indice n est égal à 3 ou 4.

21/Procédé selon l'une quelconque des revendications 14 à 20 caractérisé en ce que le radical R est un radical hydrocarboné choisi parmi les radicaux alkyles, cycloalkyles, aryles, alkylaryles, arylalkyles, alcényles et alcynyles.

22/Procédé selon la revendication 21 caractérisé en ce que le radical R est un radical alkyle.

23/Procédé selon l'une quelconque des revendications 14 à 20 caractérisé en ce que R représente

l'atome d'hydrogène.

24/Procédé selon l'une quelconque des revendications 14 à 23 caractérisé en ce que le composé B est un composé chloré.

25/Procédé selon la revendication 24 caractérisé en ce que le composé B répond à la formule (2) suivante :

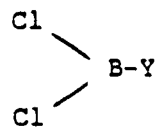

(2)

dans laquelle Y représente

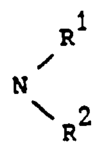

,

les radicaux $R^1$ et $R^2$, identiques ou différents, étant choisis parmi l'atome d'hydrogène, les radicaux hydrocarbonés, éventuellement substitués, et les radicaux organosilylés et hydrogénoorganosilylés.

26/Procédé selon la revendication 25 caractérisé en ce que les radicaux $R^1$ et $R^2$ sont choisis parmi les radicaux organosilylés et hydrogénoorganosilylés.

27/Procédé selon la revendication 26 caractérisé en ce que les radicaux $R^1$ et $R^2$ sont des radicaux (triorgano)silylés ou (hydrogénodiorgano)silylés.

28/Procédé selon la revendication 27 caractérisé en ce que les radicaux $R^1$ et $R^2$ sont des radicaux (trialkyl)silylés.

29/Procédé selon l'une quelconque des revendications 14 à 28 caractérisé en ce que le composé C répond à la formule (3) suivante:

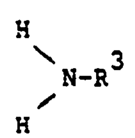

(3)

dans laquelle le radical $R^3$ est choisi parmi l'atome d'hydrogène, les radicaux hydrocarbonés éventuellement substitués, et les radicaux organosilylés et hydrogénoorganosilylés.

30/Procédé selon la revendication 29 caractérisé en ce que $R^3$ est un radical choisi parmi les radicaux alkyles, cycloalkyles, aryles, alkylaryles et arylalkyles.

31/Procédé selon la revendication 30 caractérisé en ce que $R^3$ est un radical alkyle.

32/Procédé selon la revendication 29 caractérisé en ce que $R^3$ est l'atome d'hydrogène.

33/Procédé selon l'une quelconque des revendications 14 à 32 caractérisé en ce que lesdits polymères à base de bore et d'azote sont ultérieurement traités thermiquement dans le but notamment d'améliorer leur tenue à la pyrolyse.

34/Procédé selon la revendication 33 caractérisé en ce que ledit traitement thermique est opéré en masse, à une température comprise entre 100 °C et 200 °C, et sous atmosphère d'ammoniac.

35/Polymère à base de bore et d'azote susceptible d'être obtenu par la mise en oeuvre d'un procédé tel que défini à l'une quelconque des revendications 14 à 34.

36/Composition utilisable pour la préparation d'un polymère à base de bore et d'azote tel que défini à l'une quelconque des revendications 1 à 13 et 35 caractérisée en ce qu'elle comprend au moins un composé A et au moins un composé B tels que définis dans l'une quelconque des revendications 14 à 28.

37/Utilisation d'un polymère à base de bore et d'azote tel que défini à l'une quelconque des revendications 1 à 13 et 35 pour la préparation d'un produit à base de nitrure de bore par traitement thermique dudit polymère..

Office européen des brevets

# RAPPORT DE RECHERCHE EUROPEENNE

Numero de la demande

EP 89 40 2678

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| E,X | EP-A-0 310 462 (RHONE-POULENC)<br>* Revendications 17-26 * | 1-13 | C 08 G 79/08<br>D 01 F 9/08 |
| E,X | EP-A-0 307 259 (RHONE-POULENC)<br>* Revendications 16-25 * | 1-13 | |
| A | US-A-4 581 468 (K.J.L. PACIOREK et al.) | | |
| A | GB-A-2 163 761 (I. TANIGUCHI et al.) | | |
| A | EP-A-0 278 734 (ULTRASYSTEMS DEFENSE AND SPACE) | | |

| DOMAINES TECHNIQUES RECHERCHES (Int. Cl.5) |
|---|
| C 08 G |

Le présent rapport a été établi pour toutes les revendications

| Lieu de la recherche | Date d'achèvement de la recherche | Examinateur |
|---|---|---|
| LA HAYE | 21-02-1990 | STIENON P.M.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant